# EUROPEAN PATENT SPECIFICATION

(11) **EP 0 575 417 B1**
(45) Date of publication and mention of the grant of the patent: **17.07.1996**
(21) Application number: 92906438.4
(22) Date of filing: 12.03.1992
(51) Int. Cl.: A01C 15/12, A01C 7/02

(54) **HORTICULTURAL DEVICE**
GARTENBAUVORRICHTUNG
DISPOSITIF D'HORTICULTURE

(30) Priority: 12.03.1991 GB 9105158
(43) Date of publication of application: 29.12.1993
(73) Proprietor: Levington Horticulture Limited, Ipswich, Suffolk IP8 4BZ (GB)
(72) Inventor: EDGERLEY, David Anthony, London N6 6AL (GB); WOOLLEY, Jack Francis David, London N1 1BS (GB)
(74) Representative: Dummett, Thomas Ian Peter
(86) International application number: GB9200440
(87) International publication number: WO9216099

(56) References cited:
- US-A- 2 565 143
- US-A- 3 193 157
- US-A- 3 451 595

## Description

This invention relates to an improved form of a feeding device for the application of horticultural material such as fertiliser, herbicide or seeds.

Feeding devices, or spreaders for horticultural use are well-known. Such devices conventionally comprise a hopper containing material to be distributed, which is generally in particulate form, eg. powder, granular or pelletised form; and some means of moving the hopper along or over the area of ground to which the material is to be applied. Typically the hopper is pulled or pushed along the ground using a handle attached to the hopper. As the hopper travels the material contained within it falls through apertures in the base of the hopper onto the ground.

Devices of the type described above eg. US-A-3,451,595 have hitherto suffered from the disadvantage that the distribution of material is not as even as is desired. This leads, for example, to some areas of ground receiving insufficient nutrition and others receiving to much nutrition, which, if applied to a grassed area, may lead to scorching.

We have now found that this disadvantage can be overcome or substantially mitigated by the provision of a constant feed of a horticultural material from the hopper onto a vibrating feed tray.

Thus, according to the invention there is provided a horticultural feeding device (1) comprising a hopper (2) provided with a first aperture (8) in its base and a feed tray (9) positioned sub-adjacent the first aperture (8) and vibrating means are provided for vibrating the feed tray (9) characterised in that the feed tray (9) is pivotally mounted (14) and provided with a second aperture (10).

For example, the feed tray may be affixed to the hopper by an elastic member such that the motion of the hopper along the ground will cause vibration. We particularly prefer an embodiment of the invention whereby the vibrating means comprises a cam and a cam follower. It is preferred that the feeding device is provided with wheels and that the cam takes the form of a cam-wheel, provided with a number of eccentric protrusions, which wheel rotates about the wheel axle such that upon rotation of the axle the cam-wheel engages with the cam follower and causes the feed tray to vibrate and dispense particulate material. In the case where each wheel has an independent axle the cam can be situated on either axle. It is also within the scope of this invention to include a feeding device which may have more than one cam.

The number of eccentric protrusions on the cam-wheel may vary and may be from 1 to 4, but we prefer the number of protrusions to be two or especially three.

The first and second apertures on the hopper and feed tray respectively may comprise one or more longitudinal slots or may be a plurality of holes which holes may be any conventional shape eg square or circular. The first aperture, in the hopper, is preferably a slot and preferably extends substantially along one of the longer sides of the hopper. More than one slot may be provided in the hopper, in which case the slots are preferably arranged in rows extending substantially along the whole length of the hopper. Alternatively the slots may be arranged in pairs of rows, each pair being parallel to the longer side of the hopper or each pair being staggered with respect to each other.

The optimum size of the slot will of course vary depending upon the particle size and nature of the material to be distributed using the feeding device although generally the device is intended to be used with materials of conventional particle size, eg that sold in the UK under the Trade Mark **EVERGREEN**. However, for conventional lawn chemicals applied in solid form, the rate of application is approximately 35g per m². Therefore, in general, with conventional pelletised or granular horticultural material satisfactory results are obtained when the slot is from about 2 to 15mm, eg about 4 to 9mm, in width.

The feed tray is attached to the hopper adjacent to the first aperture the feed tray is substantially beneath the first aperture. We find that vibration of the feed tray and thus distribution of the horticultural material is assisted if the feed tray is pivotally mounted on the hopper. We prefer the second aperture in the feed tray to comprise a series of holes. The holes are preferably circular. The optimum size of the holes will, of course, vary depending on the particle size and nature of the material to be distributed using the feeding device. However, in general satisfactory results are obtained when the holes are from about 2 to 15mm, eg about 4 to 9mm, in diameter.

The hopper may be hand held but it is preferably provided with wheels in which case the hopper and/or the wheels are preferably provided with points of attachment for a handle. The hopper may provided with any number of two or more wheels but we prefer the hopper to have four wheels or more preferably two wheels.

The feeding device according to the invention is advantageous because it provides more even or more continuous distribution of horticultural material to a given area of ground.

The device is particularly advantageous when used in relation to lawned or grassed areas. Thus horticultural material may be a fertiliser, eg an organic fertiliser derived from fermented chicken manure or a conventional fertiliser, eg a lawn fertiliser containing nitrogen, phosphorous, ammonia and trace elements such as potassium and iron. Alternatively the horticultural material may comprise a herbicide, eg MCPA, mecoprop, dichlorprop or 2,4-D; or a mosskiller, eg chloroxuron; or a pesticide, eg carbaryl, or a mixture of any of the aforementioned materials.

According to the invention we further provide a method of administering a horticultural material which comprises the use of a horticultural feeding device as hereinbefore described. More specifically we provide a method of applying a fertiliser, a weedkiller or a mosskiller or a combination thereof to a lawned or grassed area which comprises the use of a horticultural feeding device as hereinbefore described. In particular we provide a method of applying approximately 35g per m² of horticultural material to a lawned or grassed area which comprises the use of a horticultural feeding device as hereinbefore described. By approximately 35g per m² we mean from 30 to 40g per m².

The invention is illustrated, but in no way limited, by the particular embodiment illustrated in the accompanying drawings in which:
Figure 1 is a view in front elevation of a horticultural feeding device according to the invention,
Figure 2 is a cross-section of a horticultural feeding device along the line II-II',
Figure 3 is a cross section along the axle (6) providing a view of the cam-wheel (17) and
Figure 4 is a plan of the feed tray (9).

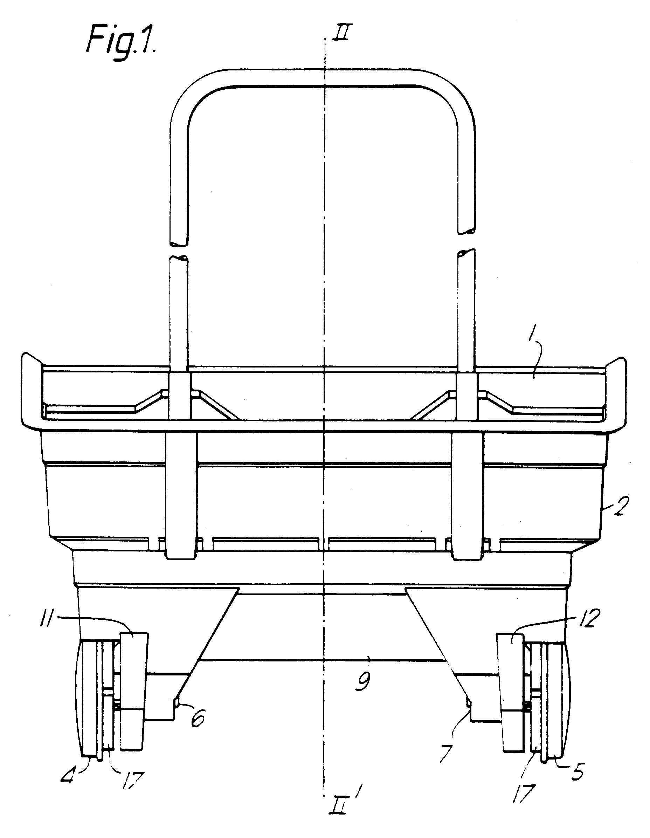

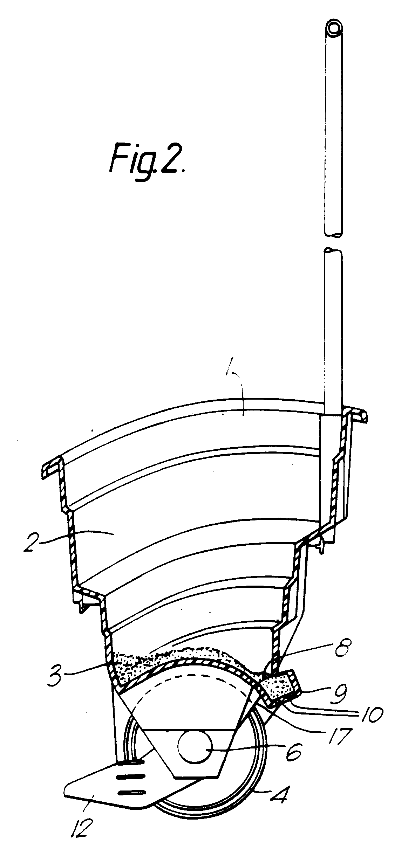

Referring to Figures 1 and 2 together, a horticultural feeding device (1) comprises a hopper (2) containing a particulate material (3), and is provided with a pair of wheels (4,5) supported on axles (6,7).

The hopper (2) is provided with a slot (8) substantially in the base of the hopper (2) and extending substantially along one of the longer sides of the hopper (2). The slot (8) is positioned above a feed tray (9) which tray is provided with a series of holes (10). The axles (6,7) are provided with cam-wheels (17) adjacent to the wheels (4,5) and the feed tray (9). The feeding device may, optionally, be provided with feet (11,12).

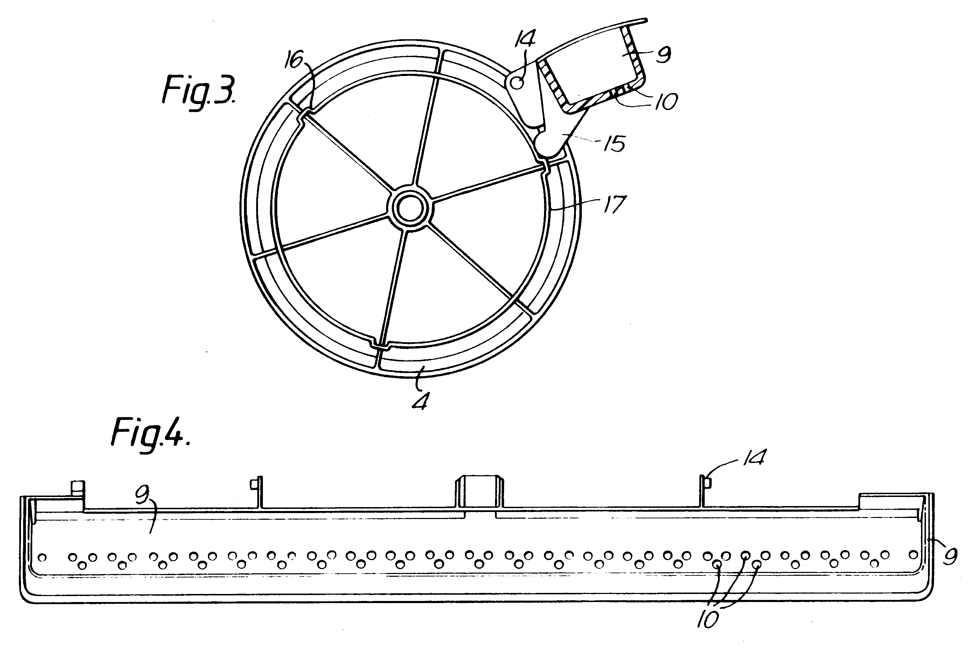

With reference to Figures 3 and 4, the feed tray (9) is mounted upon pivots (14) and is substantially the same length as the slot (8). The feed tray (9) is provided with a plurality of holes (10) and a cam follower (15) also mounted about pivot (14). The cam follower (15) is provided with a shoulder upon which the feed tray (9) rests. The wheel (4) is provided with a cam-wheel (17) being mounted co-axially with the wheel (4) and being provided with a plurality of, eg three, eccentric protrusions (16). The holes (10) in the feed tray (9) are arranged in a linear array and in triangular groups of three.

In operation the hopper (2) is filled with particulate material (3) which slowly falls through the slot (8) onto the feed tray (9). Upon moving the feeding device (1) across the ground the axles (6,7) rotate causing the eccentric protrusions (16) on the cam-wheel (17) to engage the cam follower (15) and thus causing the feed tray (9) to vibrate about the pivot (14) facilitating the distribution of the particulate material through the holes (10).

## Claims

1. A horticultural feeding device (1) comprising a hopper (2) provided with a first aperture (8) in its base and a feed tray (9) positioned sub-adjacent the first aperture (8) and vibrating means for vibrating the feed tray (9) characterised in that the feed tray (9) is pivotally mounted (14) and provided with a second aperture (10).

2. A horticultural feeding device according to Claim 1 characterised in that the vibrating means comprises a cam (16) and a cam follower (15) which co-operate to cause the feed tray (9) to pivot about its pivot mounting.

3. A horticultural feeding device according to Claim 2 characterised in that the device is provided with wheels (4 and 5) and the cam (16) rotates about the wheel axle (6 or 7).

4. A horticultural feeding device according to Claim 2 characterised in that the cam (16) comprises a cam-wheel (17.)

5. A horticultural feeding device according to Claim 4 characterised in that the cam-wheel (17) is provided with three eccentric protrusions (16).

6. A horticultural feeding device according to any one of the preceding claims characterised in that the first aperture (8) comprises a longitudinal slot which runs substantially along one of the longest sides of the hopper (2).

7. A horticultural feeding device according to Claim 6 characterised in that the width of the slot is from 2 to 15mm.

8. A horticultural feeding device according to Claim 1 characterised in that the second aperture in the feed tray (9) comprises a series of holes.

9. A horticultural feeding device according to Claim 8 characterised in that the holes are circular and have a diameter of from 2 to 15mm.

## Patentansprüche

1. Gartenbauliche Austragsvorrichtung (1), umfassend einen Behälter (2), der an seinem Grund mit einer ersten Öffnung (8) versehen ist, und einen Austragstrog (9), der unterhalb und benachbart zur ersten Öffnung (8) angeordnet ist, und Vibrationsmittel zum Vibrieren des Austragstrogs (9),
dadurch gekennzeichnet,
daß der Austragstrog (9) schwenkbar montiert und mit einer zweiten Öffnung (10) versehen ist.

2. Gartenbauliche Austragsvorrichtung nach Anspruch 1,
dadurch gekennzeichnet,
daß die Vibrationsmittel einen Nocken (16) und einen Nockenstössel (15) umfassen, welche zusammenwirken, um zu verursachen, daß der Austragstrog (9) um dessen Schwenklager verschwenkt wird.

3. Gartenbauliche Austragsvorrichtung nach Anspruch 2,
dadurch gekennzeichnet,
daß die Vorrichtung mit Rädern (4 und 5) versehen ist und der Nocken (16) um die Radachse (6 oder 7) umläuft.

4. Gartenbauliche Austragsvorrichtung nach Anspruch 2,
dadurch gekennzeichnet,
daß der Nocken (16) ein Nockenrad (17) umfaßt.

5. Gartenbauliche Austragsvorrichtung nach Anspruch 4,
dadurch gekennzeichnet,
daß das Nockenrad (17) mit drei exzentrischen Vorsprüngen (16) versehen ist.

6. Gartenbauliche Austragsvorrichtung nach einem der vorhergehenden Ansprüche,
dadurch gekennzeichnet,
daß die erste Öffnung (8) einen länglichen Schlitz umfaßt, der im wesentlichen entlang einer der längsten Seiten des Behälters verläuft.

7. Gartenbauliche Austragsvorrichtung nach Anspruch 6,
dadurch gekennzeichnet,
daß die Breite des Schlitzes von 2 bis 15 mm beträgt.

8. Gartenbauliche Austragsvorrichtung nach Anspruch 1,
dadurch gekennzeichnet,
daß die zweite Öffnung im Austragstrog (9) eine Reihe von Löchern umfaßt.

9. Gartenbauliche Austragsvorrichtung nach Anspruch 8,
dadurch gekennzeichnet,
daß die Löcher rund sind und einen Durchmesser von 2 bis 15 mm haben.

## Revendications

1. Dispositif d'épandage (1) pour horticulture comprenant une trémie (2) munie d'une première ouverture (8) à sa base, un plateau de distribution (9) disposé au-dessous et à proximité de la première ouverture (8) et des moyens de vibration pour faire vibrer le plateau de distribution (9), caractérisé en ce que le plateau de distribution (9) est monté pivotant (14) et comprend une deuxième ouverture (10).

2. Dispositif d'épandage pour horticulture selon la revendication 1, caractérisé en ce que les moyens de vibration comprennent une came (16) et une came suiveuse (15) qui coopèrent pour amener le plateau de distribution (9) à pivoter autour de son pivot.

3. Dispositif d'épandage pour horticulture selon la revendication 2, caractérisé en ce qu'il comprend des roues (4 et 5) et en ce que la came (16) tourne autour de l'axe des roues (6 ou 7).

4. Dispositif d'épandage pour horticulture selon la revendication 2, caractérisé en ce que la came (16) comprend un disque à cames (17).

5. Dispositif d'épandage pour horticulture selon la revendication 4, caractérisé en ce que le disque à cames (17) est muni de trois protubérances excentriques.

6. Dispositif d'épandage pour horticulture selon l'une des revendications précédentes, caractérisé en ce que la première ouverture (8) comprend une fente longitudinale qui s'étend sensiblement le long d'un des plus grands côtés de la trémie (2).

7. Dispositif d'épandage pour horticulture selon la revendication 6, caractérisé en ce que la largeur de la fente est comprise entre 2 et 15 mm.

8. Dispositif d'épandage pour horticulture selon la revendication 1, caractérisé en ce que la deuxième ouverture ménagée dans le plateau de distribution (9) comprend une série d'orifices.

9. Dispositif d'épandage pour horticulture selon la revendication 8, caractérisé en ce que les orifices sont circulaires et présentent un diamètre compris entre 2 et 15 mm.
